# EUROPEAN PATENT APPLICATION

(11) **EP 1 903 538 A2**
(43) Date of publication of application: **26.03.2008**
(21) Application number: 07116881.9
(22) Date of filing: 20.09.2007
(51) Int. Cl.: G09F 3/02, G09F 3/10

(54) **System and method for producing rewritable cards on demand**

(30) Priority: 20.09.2006 US 533491
(71) Applicant: Kanematsu USA, Inc., Somerset NJ 08873 (US)
(72) Inventor: Tanigawa, Kaoru, Princeton, NJ 05840 (US)
(74) Representative: Ponti Sales, Adelaida

(57) **Abstract**

A system and method for attaching a rewritable patch to a non-rewritable card. The rewritable patch is attached to a carrier film through the use of a first adhesive on a first side of the patch. A second adhesive is disposed on a second side of the patch. The film, along with the attached patch, is wound around a supply spool. The film on the supply spool is fed to a heat roller where cards are conveyed proximate to the patches. Heat is applied to the heat roller and the second adhesive on the patch activates, attaching the patch to the card. A take-up spool then takes up the carrier film causing the patch to detach from the carrier film.

## Description

### Background of the Invention

The invention relates to a system for producing rewritable cards and, more particularly, to a system and method which can selectively produce individual cards with rewritable properties as desired.

The use and manufacture of rewritable cards are known in the art. In many cases, such cards are used for identification and/or for merchandising and marketing purposes. For example, a medical identification card may have permanent imprinting indicating an individual's name and identification number. Such a card may have additional rewritable printing indicating a next appointment for the individual with a particular doctor. Other examples of rewritable cards include a loyalty card where points accrued by the owner of the card for loyalty with a particular establishment may be selectively added to/or erased from the card using the card's rewritable properties.

In general, such rewritable cards are produced by providing a large carrier sheet of laminate material, affixing to said sheet a layer of rewritable material, and then affixing a protective layer over the rewritable layer. Thereafter, the combination including the large carrier, rewritable layer, and protective layer, is die cut into a plurality of rewritable cards. A problem with such manufacture is that a plurality of cards must all be made at the same time - a single card cannot be made. A manufacturer of such cards may not always desire to produce a large quantity of cards at a particular time. Moreover, in order to handle the sizable combination of a large carrier sheet, rewritable material, and protective layer, a large manufacturing facility is needed. Furthermore, an expensive die cut machine is needed. These limitations make it difficult for a small company to manufacture a rewritable card. Additionally, in these prior art systems the cards themselves are created with rewritable properties. There is no system available in the prior art to add a rewritable property to a previously non-rewritable card.

Therefore, there is a need in the art for a system and method for producing rewritable cards which does not have the above-mentioned drawbacks of the prior art.

### Summary of the Invention

One aspect of the invention is a combination of a flexible carrier film and at least one patch having a rewritable property, the patch having a first and a second side, the first side including a first adhesive, the second side including a second adhesive. The first side of the patch is attached to the flexible carrier due to the first adhesive. The second adhesive has stronger adhesive properties than the first adhesive so that, upon activation of the second adhesive and upon contact of the patch with a card, the patch is effective to detach from the carrier film and attach to the card due to the second adhesive.

Another aspect of the invention is a method for attaching a rewritable patch to a non-rewritable card. The method comprises conveying a patch to a first position, the patch being carried on a carrier film and having a rewritable property, the patch having a first and a second side, the first side including a first adhesive, the second side including a second adhesive, the second adhesive having stronger adhesive properties than the first adhesive. The method further comprises conveying a non-rewritable card into proximity with the patch at the first position and activating the second adhesive to cause the patch to attach to the card.

Another aspect of the invention is a system for attaching a rewritable patch to a non-rewritable card. The system comprises a carrier film carrying at least one patch having a rewritable property, the patch having a first and a second side, the first side including a first adhesive, the second side including a second adhesive, the second adhesive having stronger adhesive properties than the first adhesive. The system further comprises a first transport effective to convey the carrier film to a first position and a second transport effective to convey a non-rewritable card into proximity with the carrier film at the first position. The system further comprises a controller connected to the first and second transports, the controller effective to activate the second adhesive and cause the patch to attach to the card.

### Brief Description Of The Drawings

Fig. 1 is a top view of a carrier sheet in accordance with an embodiment of the invention.
Fig. 2 is a side cut away view of a system which may be used in accordance with an embodiment of the invention.
Fig. 3 is a magnified view of a portion of the system shown in Fig. 2.

### Detailed Description of the Preferred Embodiment(s)

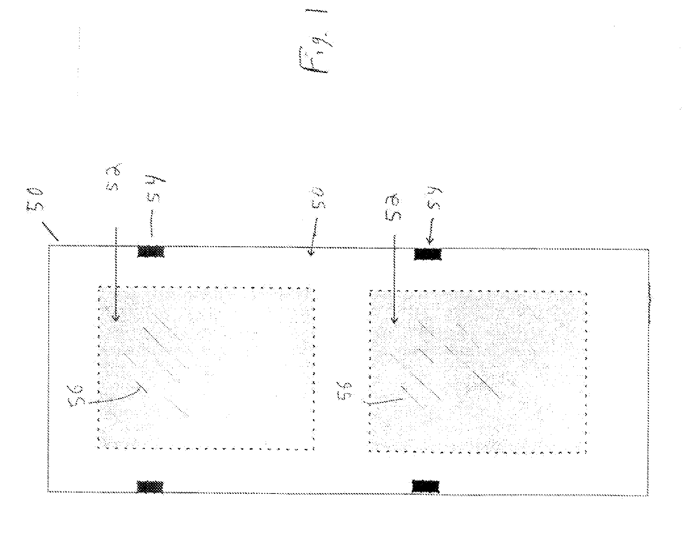

Referring to Fig. 1, there is shown a carrier film 50 which may be used in accordance with an embodiment of the invention. Carrier film 50 may be made of a PET material. Two rewritable patches 52 are attached to carrier film 50 with first, temporary adhesive. The first adhesive is used to hold the rewritable patch to the carrier until an application of the greater force on the patches 52 in an opposite direction pulls the patches away from the carrier film 50. The application of greater force is by a second adhesive that is applied to the opposite side of the patches 52 which could be glue, takes, rope, fasteners, ties or any other means for attaching structures together. Moreover, second adhesive 56 is heat activated so that before heat is applied to the second adhesive 56, second adhesive 56 has generally no adhesive properties. But, after the application of heat, second adhesive 56 has greater adhesive properties than the adhesive attaching patches 52 to the carrier film 50. Position registration marks 54 may be used to position carrier film 50 in a system described in more detail below.

Patches 52 have a generally rectangular cross-section and are designed to have a size and shape substantially corresponding to a card upon which patches 52 will be attached. Patches 52 are made of a rewritable film such as that available from MITSUBISHI PAPER MILLS LIMITED. The technique used to produce the patches made up from MITSUBISHI PAPER MILLS LIMITED is a die cutting process in which a cutting die is milled in the size of the patch required. This cutting die then stamps out the finished patch which is then applied to a carrier.

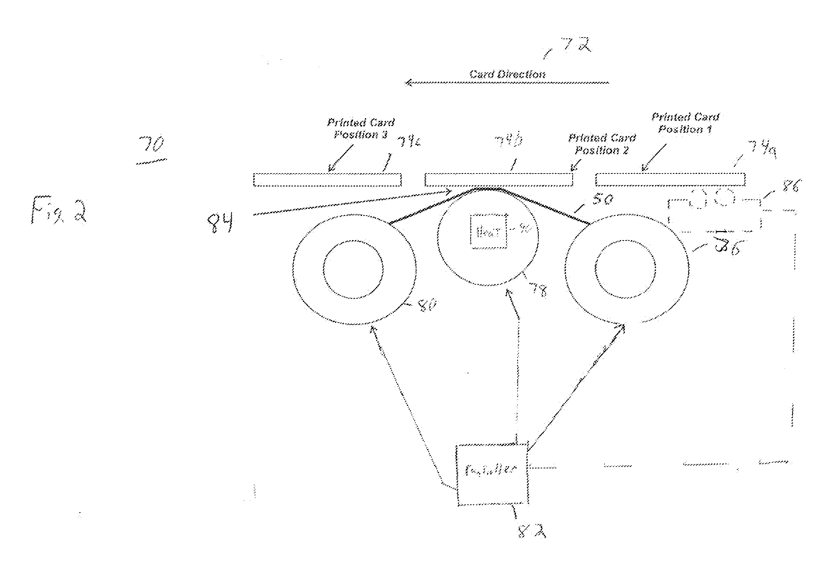

Referring also to Fig. 2, there is shown a system or device 70 which may be used to apply patches 52 to a card. Card 74 is shown at three distinct positions - position 1 at 74a, position 2 at 74b and position 3 at 74c. A user operating a device 70 may place card 74 at first position 74a. Thereafter, card 74 is conveyed using a transport such as, for example, a conveyor belt or rollers 86, so that card 74 will eventually be at position 74b. At position 74b, patch 52 may be attached to card 74. Thereafter, card 74 is moved to position 74c where card 74 may be removed and used now having rewritable patch 52 attached thereto. A controller 82 controls the movement of transport 86.

Controller 82 also controls the movement of a supply spool 76, a heat roller 78 and a take-up spool 80 (Fig.2). Wound around a circumference of supply spool 76 is an elongated sheet of carrier film 50. Controller 82 controls the movement and positioning of card 74 among positions 74a, 74b and 74c by conveying card 74 to those positions using, for example, transport 86. Moreover, controller 82 controls the movement of supply spool 76 and take-up spool 80 so that a desired portion of carrier film 50 may be placed on heat roller 78 when card 74 is disposed at position 74b proximate to heat roller 78. Furthermore, controller 82 controls a heat element 90 of heat roller 78 to heat up the desired portion of film 50 when patch 52 is aligned with card 74 at position 74b. To facilitate the alignment of carrier film 50 and patch 52 with card 74 at position 74b, registration markers 54 (Fig. 1) may be used and monitored by controller 82 through the use of, for example, an optical reader. Finally, controller 82 controls transport 86 to move card 74 to position 74c where card 74 now includes patch 52 adhesively attached thereon. Moreover, controller 82 controls take-up spool 80 to take-up and retain portions of carrier film 50 which no longer include patches 52. The combination of the movement of transport 86 and take-up spool 80 away from position 74b causes card 74 to detach from carrier film 50 due to second adhesive 56 having stronger adhesive properties than the first adhesive. Although a supply spool and take-up spool are shown, clearly any type of transport may be used for carrier film 50.

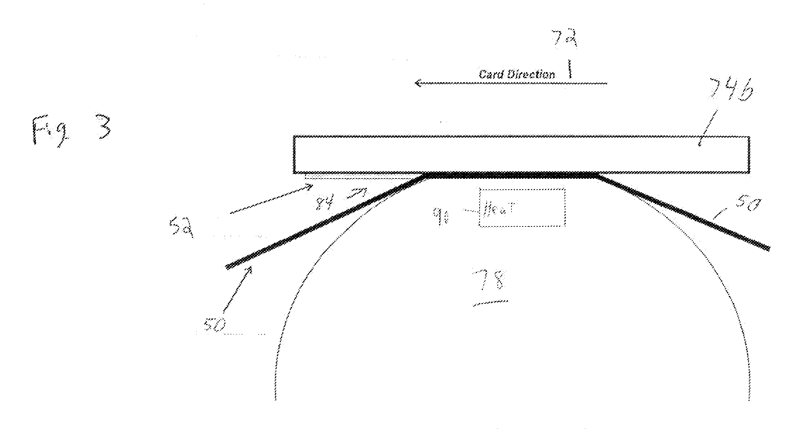

Card 74 moves in a direction 72 where card 74 starts at position 74a external from or away from heat roller 78. Thereafter, card 74 moves to position 74b in proximity to heat roller 78 and finally to position 74c away from heat roller 78. As shown most clearly in Fig. 3, when card 74 is moved proximate to heat roller 78 at position 74b, when heating element 90 of heat roller 78 is active, heating element 90 heats up second adhesive 56 (shown in Fig. 1) on a top side of patch 52. Such heating activates the adhesive properties of second adhesive 56 and causes patch 52 to attach to card 74. As discussed above, second adhesive 56 is stronger than the first adhesive retaining patch 52 on carrier film 50. As a consequence, when transport 86 and take-up spool 80 move, patch 52 detaches from carrier film 50 and attaches to card 74. A patch film separation point 84 is shown in Figs. 2 and 3 highlighting where patch 52 separates from carrier film 50.

In the prior art systems, an identification card itself is created with rewritable properties. Such a system requires knowing even before the card is created that it will have rewritable properties. Moreover, as discussed in the Background, special manufacturing facilities are required to produce the cards and many cards must be created at once. In contrast, in a system in accordance with the invention, existing cards, such as driver's licenses, not having rewritable properties, may be used by users and thereafter rewritable materials and/or properties may be added thereto. Furthermore, as a single card with a rewritable patch may be created at one time, instead of the many cards required by prior art systems, a smaller device than that available in the prior art may be used and may even be incorporated into a desktop device. Cards may be created in accordance with the invention even on demand.

Thus, by providing a carrier film with rewritable patches attached thereto and selectively attaching those patches to a card, an improved system and method for producing rewritable cards is realized.

While the invention has been described in its preferred embodiments, it should be clear that the invention is not limited except as defined in the accompanying claims.

## Claims

1. In combination:
a flexible carrier film; and
at least one patch having a rewritable property, the patch having a first and a second side, the first side including a first adhesive, the second side including a second adhesive; wherein
the first side of the patch is attached to the flexible carrier due to the first adhesive; and
the second adhesive has stronger adhesive properties than the first adhesive so that, upon activation of the second adhesive and upon contact of the patch with a card, the patch is effective to detach from the carrier film and attach to the card due to the second adhesive.

2. The combination as recited in claim 1, wherein the patch has a rectangular cross-section.

3. The combination as recited in claim 1, wherein the carrier film includes at least one position registration mark.

4. The combination as recited in claim 1, wherein the second adhesive is activated by heat.

5. A method for attaching a rewritable patch to a non-rewritable card, the method comprising:
conveying a patch to a first position, the patch being carried on a carrier film and having a rewritable property, the patch having a first and a second side, the first side including a first adhesive, the second side including a second adhesive, the second adhesive having stronger adhesive properties than the first adhesive;
conveying a non-rewritable card into proximity with the patch at the first position;
activating the second adhesive to cause the patch to attach to the card.

6. The method as recited in claim 5, wherein the first position is proximate to a heat roller.

7. The method as recited in claim 5, further comprising:
conveying the carrier film away from the heat roller; and
conveying the card away from the heat roller wherein the conveying the carrier film and the conveying the card, along with the adhesive properties of the second adhesive, causes the patch to detach from the carrier film.

8. A system for attaching a rewritable patch to a non-rewritable card, the system comprising:
a carrier film carrying at least one patch having a rewritable property, the patch having a first and a second side, the first side including a first adhesive, the second side including a second adhesive, the second adhesive having stronger adhesive properties than the first adhesive;
a first transport effective to convey the carrier film to a first position;
a second transport effective to convey a non-rewritable card into proximity with the carrier film at the first position;
a controller connected to the first and second transports, the controller effective to activate the second adhesive and cause the patch to attach to the card.

9. The system as recited in claim 8, further comprising:
a heat roller including a heat element; and wherein
the first position is proximate to the heat roller; and
the controller is effective to control the heat element.

10. The system as recited in claim 8, wherein the patch has a rectangular cross-section.

11. The system as recited in claim 8, wherein the carrier film includes at least one position registration mark and the controller is effective to use the position registration mark to convey the carrier film to the first position.

12. The system as recited in claim 9, wherein the controller is further effective to:
control the first transport to convey the carrier film away from the heat roller; and
control the second transport to convey the card with the patch away from the heat roller.

13. The system as recited in claim 12, wherein when the controller controls the first transport to convey the carrier film away from the heat roller and controls the second transport to convey the card with the patch away from the heat roller, the patch detaches from the carrier film.
